**Europäisches Patentamt**

**European Patent Office**

**Office européen des brevets**

(11) Numéro de publication : **0 487 399 A1**

(12) # DEMANDE DE BREVET EUROPEEN

(21) Numéro de dépôt : **91403098.6**

(51) Int. Cl.⁵ : **A23J 1/20**

(22) Date de dépôt : **18.11.91**

(30) Priorité : **20.11.90 FR 9014449**

(43) Date de publication de la demande :
**27.05.92 Bulletin 92/22**

(84) Etats contractants désignés :
**DE DK GB NL SE**

(71) Demandeur : **Société PILLET**
**Z.I. du pont Réau, Allée Beaumarchais**
**F-18390 Saint Germain du Puy (FR)**

(72) Inventeur : **Laimay, François**
**4 Rue Gourgues et Marsaud**
**F-33200 Bordeaux (FR)**

(74) Mandataire : **Boulinguiez, Didier**
**Cabinet Plasseraud, 84, rue d'Amsterdam**
**F-75009 Paris (FR)**

(54) **Procédé continu de lavage de protéines et installation pour la mise en oeuvre de ce procédé.**

(57)    L'invention a pour objet un procédé continu de lavage de protéines, notamment de protéines laitières et plus particulièrement de caséine, consistant à faire circuler une suspension desdites protéines dans un ou plusieurs modules de filtration tangentielle. Elle a également pour objet une installation de lavage en continu de protéines, une installation de concentration d'une suspension de protéines et une installation de fabrication de caséine.

EP 0 487 399 A1

L'invention a pour objet un procédé continu de lavage de protéines, notamment de protéines laitières et plus particulièrement de caséine, et a également pour objet l'installation pour la mise en oeuvre de ce procédé.

Il est fréquent que des protéines soient isolées de leur milieu naturel et amenées, par lavage, jusqu'à une pureté acceptable afin d'être utilisées par exemple dans l'alimentation, humaine ou animale, la pharmacie ou la cosmétologie, ou l'industrie. C'est le cas notamment des protéines de lait, dont en particulier la caséine et les protéines sériques, qui sont isolées respectivement du lait ou du lactosérum par coagulation chimique, enzymatique ou thermique, ou des protéines de soja, de blé, de sang, de poisson, qui sont de même isolées ou séparées de leur milieu naturel par coagulation, agglomération ou précipitation. En règle générale, il est nécessaire de procéder, après l'étape d'isolation, de séparation ou de concentration des protéines insolubles ou insolubilisées obtenues, à une étape de lavage, afin d'amener lesdites protéines au degré de richesse ou de pureté requis pour leur utilisation.

Si l'on se réfère par exemple à la caséine, sa fabrication nécessite trois étapes :
– une étape de précipitation permettant de séparer la caillebotte insoluble des éléments solubles du lait et du sérum,
– une étape de lavage,
– une étape de séchage.

L'étape de lavage est évidemment une étape décisive pour l'obtention d'une caséine aussi pure que possible; elle permet en effet la séparation des impuretés essentiellement constituées par le lactose, les sels minéraux, les acides aminés et les protéines solubles.

Traditionnellement, cette étape de lavage était effectuée en discontinu, la caillebotte obtenue à l'issue de l'étape de coagulation étant lavée plusieurs fois avec de l'eau dans une cuve. Mais il est évident que ces opérations de lavage par remplissages et vidages successifs entraînent la consommation de grandes quantités d'eau et que la productivité d'une telle installation est faible.

Ce procédé a donc été ultérieurement amélioré en effectuant le lavage dans une série de cuves disposées en cascade, avec transferts et essorages intermédiaires de la caséine d'une cuve à l'autre. Le système a d'ailleurs été mécanisé pour le faire fonctionner en continu; ainsi, la caséine progresse dans la channe en parcourant successivement les divers étages en devenant de plus en plus pure, tandis que l'eau propre de lavage entrant au dernier étage, grâce à un jeu de séparateurs et de pompes, remonte la channe d'un étage à l'autre, en se chargeant progressivement en impuretés. L'efficacité d'un tel système est d'autant plus grande que le nombre d'étages est plus élevé. Mais il a été constaté qu'avec ce système le nombre de 5 étages constituait la limite pratique et que l'efficacité de l'installation n'était alors pas suffisante pour assurer une qualité acceptable du produit fini, même au prix de consommations d'eau élevées.

En effet, il a été constaté qu'il était, avec un tel système, difficile d'abaisser le taux d'acidité libre à moins de 0,2 % sur extrait sec et le taux de lactose à moins de 0,3 % sur extrait sec, malgré des consommations d'eau variant selon les cas de 0,4 à 1 litre d'eau par litre de lait.

D'autres procédés de lavage de la caséine ont donc été développés, parmi lesquels on peut citer celui décrit dans le brevet néo-zélandais n° 196 624, appartenant à la Société Demanderesse, consistant à réaliser le lavage de la caséine à contre-courant dans une tour verticale à multi-étages.

Ce procédé a permis une forte réduction de la consommation d'eau puisque celle-ci n'atteint plus que 0,2 à 0,3 litre d'eau par litre de lait tout en assurant des taux d'acidité libre et de lactose inférieurs à 0,1 % sur extrait sec. Mais les volumes d'eau immobilisés sont malheureusement très importants, ce qui induit des contraintes assez lourdes, notamment de temps et de sécurité, dans l'utilisation de ce système de lavage.

Il faut souligner d'autre part que dans les procédés de lavage de protéines, dont notamment la caséine, le facteur contamination bactérienne doit être pris en compte très sérieusement et qu'il faut de ce fait s'efforcer d'éviter au maximum l'exposition des protéines à l'air et s'efforcer également de réduire les temps de séjour desdites protéines dans les installations de traitement. Il faut aussi veiller à ne pas modifier les caractéristiques physiques et de texture des protéines, qui jouent un rôle important dans les propriétés fonctionnelles finales du produit.

La présente invention permet de répondre aux différents desiderata de la technique et de résoudre bon nombre des difficultés encore rencontrées à l'heure actuelle dans le lavage des protéines insolubles ou insolubilisées du genre de la caséine.

Le procédé de lavage de protéines insolubles ou insolubilisées conforme à l'invention est en effet réalisé en continu, entraîne une très faible consommation de fluide de lavage, met en oeuvre des volumes peu importants, est rapide, et permet néanmoins d'obtenir des produits de pureté très élevée, compatible avec des utilisations pharmaceutiques ou alimentaires.

Ce procédé consiste à faire circuler en continu une suspension de protéine, notamment de protéine laitière et plus particulièrement de caséine, dans un ou plusieurs modules de filtration tangentielle comportant chacun au moins un canal axial muni ou constitué d'éléments de filtration dans lequel circule la suspension et qui est traversé par un flux de fluide de lavage entrant et sortant.

Ledit flux de fluide de lavage est établi le plus généralement de façon sensiblement perpendiculaire au sens de circulation de la suspension de protéine.

La suspension de protéine est généralement une suspension aqueuse de protéine mais elle peut contenir également des solvants tels que des hydrocarbures, des éthers ou des alcools, ces derniers étant préférés.

Le fluide de lavage est de préférence constitué par l'eau ou par une solution hydro-alcoolique mais, dans certains cas, il peut être constitué par un autre solvant, capable de solubiliser ou d'entraîner les impuretés présentes dans la protéine.

De façon préférentielle, la protéine à purifier est en suspension dans l'eau et le fluide de lavage est l'eau.

L'invention sera mieux comprise à l'aide du complément de description et des dessins annexés, lesquels complément et dessins sont, bien entendu, donnés surtout à titre d'exemple.

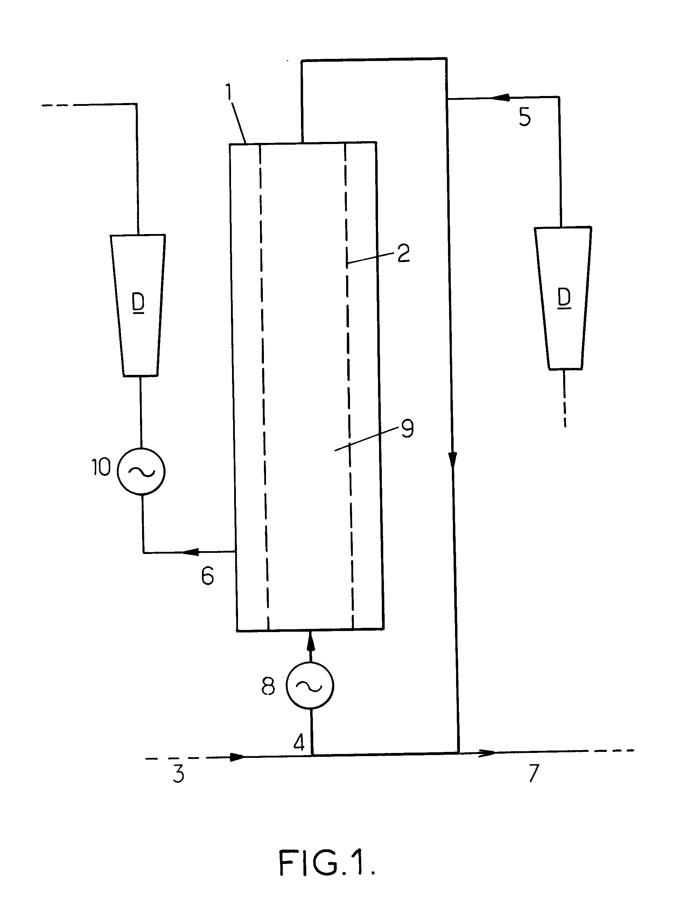

La figure 1 représente un module de filtration conforme à l'invention. Celui-ci est constitué d'un bâti 1 sur lequel est fixé l'élément filtrant 2. La suspension de protéine insoluble, notamment de caséine, est amenée en 3 avec un certain débit W. Cette suspension de protéine est prélevée en 4 et envoyée par une pompe 8 dans le module de filtration où elle est véhiculée tangentiellement au médium filtrant, à l'intérieur du canal axial 9. Le lavage s'effectue par la technique de diafiltration, le fluide de lavage entrant en 5 dans la boucle de circulation de la suspension de protéine, et l'eau chargée des impuretés solubles étant soutirée en 6 à l'aide d'une pompe 10.

Le débit de circulation dans le module de filtration est maintenu très supérieur au débit W d'arrivée de la suspension de protéine de façon à permettre la réalisation d'une bonne diafiltration. De ce fait la suspension de protéine réalise un certain nombre de tours de boucle au niveau du module. La suspension de protéine réalise ainsi, dans le cas de figure présenté, un mouvement ascendant dans le canal axial du module de filtration.

Selon un mode de réalisation avantageux du procédé conforme à l'invention, et de façon à permettre l'obtention de la pureté recherchée, on fait circuler la suspension de protéine dans plusieurs modules de filtration montés en série. La cinétique de désorption des impuretés solubles contenues dans la protéine à purifier exige en effet le plus souvent un temps de séjour suffisant dans les modules de filtration, temps qui ne peut généralement être obtenu, dans l'exemple de la caséine, qu'avec au moins deux modules de filtration.

Le nombre de modules dépend du rapport de concentration des éléments polluants contenus dans la protéine entre l'entrée et la sortie de l'installation de lavage, et du rapport du débit de fluide de lavage sur le débit de la suspension de protéine.

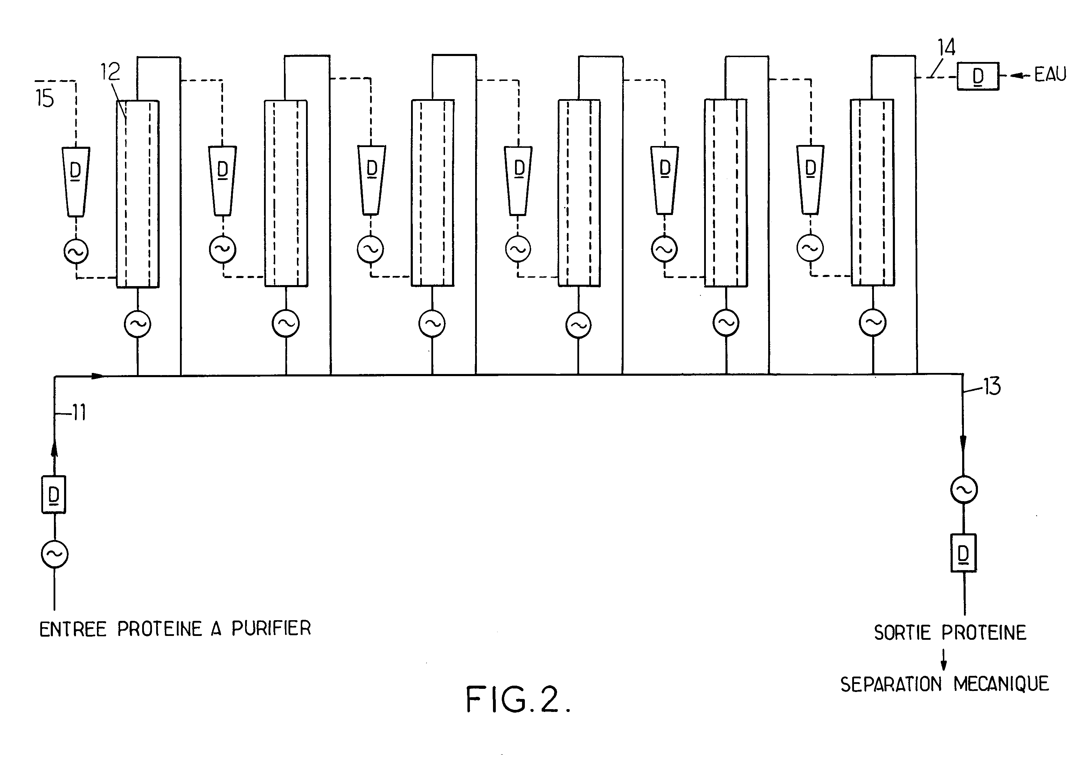

La figure 2 représente schématiquement une installation de lavage en continu de protéine comportant ainsi six modules de filtration montés en série. La protéine à purifier entre dans le système de lavage en 11, arrive au niveau du premier module où elle est prélevée pour entrer dans la première boucle avec le fluide de lavage arrivant à contre-courant, pour être purifiée au niveau de l'élément filtrant 12 de ce premier module. La suspension de protéine est ensuite amenée au niveau du second module où elle se purifie un peu plus par diafiltration avec le fluide de lavage circulant dans la deuxième boucle.

La suspension de protéine passe ainsi successivement à l'intérieur des six modules de filtration où elle se purifie progressivement au contact du fluide de lavage circulant à contre-courant et sort en 13 pour être conduite vers l'étape de séchage.

Le fluide de lavage est injecté dans le circuit en 14 et circule à contre-courant dans chacun des modules où il se charge progressivement en impuretés solubles et sort en 15. Il peut alors éventuellement être filtré afin de récupérer les fines de protéine entraînées lors du processus de lavage.

De façon avantageuse, la vitesse tangentielle, ou axiale, de circulation de la suspension de protéine dans le canal axial est supérieure à 1,0 m/s, et de préférence comprise entre 1,1 et 10,0 m/s et plus préférentiellement encore entre 2 et 3 m/s. Lorsque la vitesse est trop faible, on risque en effet de rencontrer des problèmes de sédimentation de la suspension de protéine, alors que si la vitesse imposée est trop importante, on risque d'augmenter les pertes en protéines passant à travers le médium filtrant. La vitesse de la suspension doit d'autre part être suffisante pour créer des forces de cisaillement permettant de limiter le colmatage du médium filtrant à l'interface entre ce dernier et la suspension de protéine.

Le canal axial ou les canaux axiaux comportés par chaque module de filtration tangentielle présentent une taille bien déterminée afin que le système de lavage puisse fonctionner dans des conditions satisfaisantes. La dimension de passage de ce canal, ou de ces canaux, est de préférence comprise entre 1 et 20 mm, et plus préférentiellement encore comprise entre 7 et 13 mm. La forme de ce canal peut être cylindrique ou parallélépipédique. Dans le premier cas la dimension en question est évidemment constituée par le diamètre du canal, tandis que dans le second cas cette dimension est constituée par la distance séparant les deux faces munissant ou constituant les éléments de filtration.

La maille des éléments de filtration munissant ou, de préférence, constituant le canal axial ou les canaux axiaux présents dans chaque module est comprise entre 5 et 100 µm, de préférence entre 10 et 80 µm, et plus préférentiellement encore entre 30 et 70 μm. Si la maille est trop petite, il y a risque de colmatage des éléments filtrants et risque d'augmentation de la perte de charge transversale. Toutefois, cette taille doit être inférieure à la taille des particules de protéine en suspension de façon à éviter le colmatage. A l'inverse, si la maille est trop importante, il se produit une augmentation des pertes en fines.

Les éléments de filtration peuvent par exemple être constitués par des grilles de marque JOHNSON, présentant la taille de maille choisie, découpées aux dimensions voulues et disposées ensuite à l'intérieur des modules.

Le débit de fluide d'appoint de lavage entrant dans le système de lavage est généralement compris entre 5 et 100 % et de préférence entre 10 et 80 % du débit de suspension de protéine.

Dans le cas de la caséine, le débit d'eau d'appoint est compris entre 2 et 20 %, de préférence entre 5 et 15 %, et plus préférentiellement encore de l'ordre de 10 % par rapport au débit de lait entrant dans l'installation de coagulation.

La matière sèche de suspension de protéine envoyée dans l'installation de lavage est comprise entre 1 et 35 %, de préférence entre 5 et 20 %. Dans le cas de la caséine, la matière sèche en question est de préférence comprise entre 10 et 15 %.

L'augmentation de la température augmente la percolation, mais il est souhaitable de ne pas trop chauffer la protéine pour éviter sa dénaturation. De même que l'on peut maintenir une température identique tout au long des différents étages de l'installation de lavage, on peut également établir un gradient de température, croissant ou décroissant, du premier module au dernier. De préférence, ce gradient est choisi croissant, la suspension de protéine étant amenée à une température de 35 à 55°C, de préférence de 45 à 50°C, avant l'entrée dans le premier module de lavage et étant amenée dans le dernier module à une température supérieure ou égale à 65°C, et de préférence à 70°C, afin d'effectuer une pasteurisation. Ceci peut être réalisé facilement par chauffage du fluide de lavage circulant au niveau du dernier module de filtration, par injection de vapeur par exemple.

De façon à empêcher une solubilisation de la protéine, on règle le pH de la suspension de protéine et/ou du fluide de lavage au voisinage du point isoélectrique de ladite protéine, généralement par addition d'acide. Dans le cas de la caséine acide par exemple, de l'acide chlorhydrique est ainsi ajouté à l'eau de lavage pour l'amener à un pH de 4,4 à 5,0.

Les pertes en fines de protéines sont évaluées sur la base des taux de protéines contenues dans le fluide de lavage quittant l'installation. Elles augmentent avec le rapport quantité de fluide de lavage/quantité de suspension de protéine. Comme ce rapport est très bas dans le procédé conforme à l'invention, les pertes en fines sont également très basses. Ainsi, pour la caséine, le rapport quantité d'eau/quantité de lait étant généralement proche de 0,1, le taux de pertes en fines est de l'ordre de 4 à 5 % seulement avant clarification.

De façon générale, les pressions trans-médium nécessaires pour assurer des flux corrects à l'intérieur du circuit sont comprises entre $3.10^3$ pascals et $12.10^3$ pascals, et de préférence entre $5.10^3$ et $1.10^4$ pascals.

Les pressions typiques de fonctionnement d'une installation conforme à l'invention sont les suivantes :
– pression de gavage : de $1.10^4$ à $2,5.10^4$ pascals,
– pression à l'entrée des modules : $1.10^4$ à $4.10^4$ pascals,
– pression à la sortie des modules : $1.10^4$ à $2.10^4$ pascals,
– pression d'entrée de fluide de lavage propre : $1.10^4$ pascals environ,
– pression de fluide de lavage inter-boucles : identique à la pression de gavage,
– pression d'extraction de fluide de lavage chargé : 0 à $1.10^4$ pascals environ.

L'installation de lavage en continu de protéines conforme à l'invention peut également être utilisée en concentration de la suspension de protéines. Dans ce cas il n'y a pas d'injection de fluide de lavage dans le circuit. La suspension de protéines se concentre par filtration tangentielle dans le ou les modules, une partie du fluide, généralement constitué par l'eau, dans lequel la protéine se trouve en suspension étant éliminé à travers le médium filtrant et soutiré du circuit par l'intermédiaire des pompes. On peut ainsi augmenter la concentration de la suspension de protéine d'un facteur de 1,2/1 à 15/1. Ainsi, dans le cas de la caséine par exemple, avec trois modules de filtration montés en série, il est possible d'augmenter la concentration de la caséine de 2,7% à 14 %. De préférence, cette étape de concentration est réalisée à une température comprise entre 20 et 50°C, et plus préférentiellement entre 20 et 40°C.

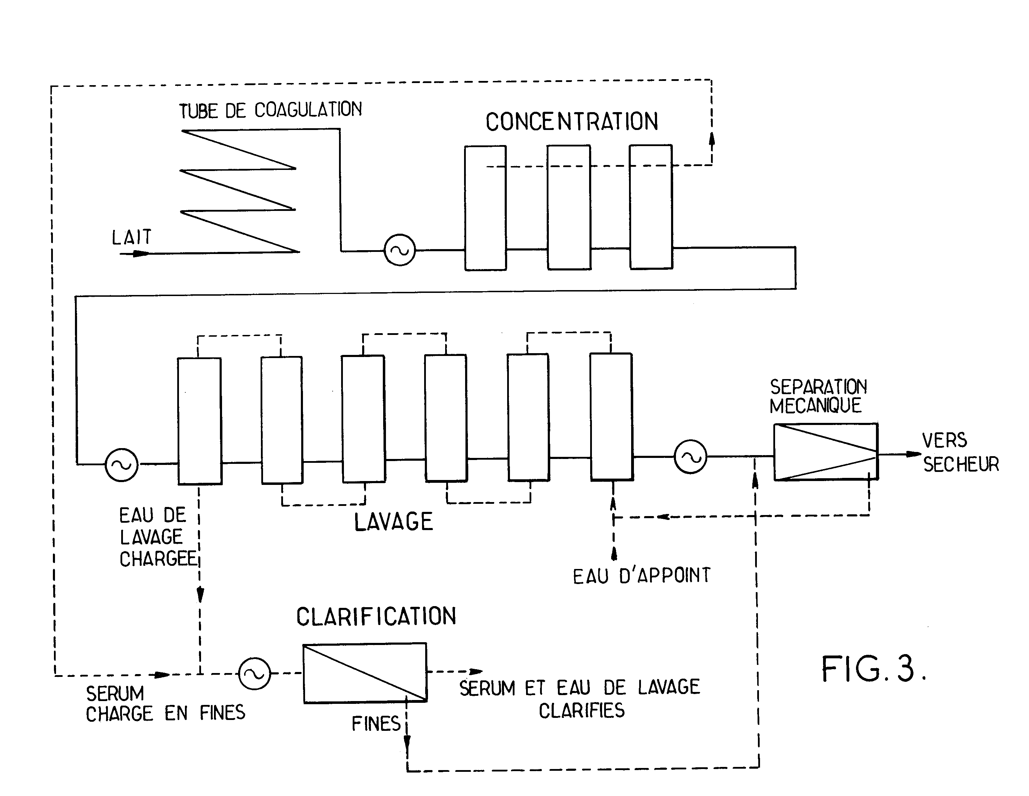

La figure 3 montre une installation complète de préparation de caséine purifiée à partir de lait, cette installation comprenant un étage de coagulation, un étage de concentration de la caillebotte obtenue par passage dans trois modules de filtration, sans injection d'eau, et un étage de lavage à l'aide de six modules de filtration, de l'eau étant injectée dans ledit étage de lavage, la caséine obtenue étant ensuite concentrée puis séchée.

L'installation de lavage de protéine conforme à l'invention est caractérisée par le fait qu'elle comprend au moins un module de filtration comportant au moins un canal axial muni ou constitué d'éléments de filtration, des moyens aptes à amener et à faire circuler la suspension de protéine à l'intérieur dudit canal axial, des moyens propres à amener et à faire circuler un fluide de lavage dans ledit canal axial, ainsi que des moyens propres à réaliser une boucle de circulation entre l'entrée et la sortie dudit module de filtration.

Lorsque l'installation de lavage conforme à l'invention comprend plusieurs modules de filtration, ceux-ci sont disposés en série, des moyens de circulation étant établis entre chacun d'eux, la suspension de protéine étant envoyée à l'intérieur du premier module et le fluide de lavage étant envoyé à l'intérieur du dernier module.

L'invention vise également une installation de concentration d'une suspension de protéine, ladite installation étant caractérisée par le fait qu'elle comprend au moins un module de filtration comportant au moins un canal axial muni ou constitué d'éléments de filtration, des moyens aptes à amener et à faire circuler la suspension de protéine à l'intérieur dudit canal axial, ainsi que des moyens propres à réaliser une boucle de circulation entre l'entrée et la sortie dudit module de filtration.

Lorsque l'installation de concentration conforme à l'invention comprend plusieurs modules de filtration, ceux-ci sont disposés en série.

L'invention vise enfin une installation de fabrication de caséine, caractérisée par le fait qu'elle comprend un étage de coagulation du lait, un étage de concentration de la caillebotte obtenue constitué par une installation de concentration conforme à l'invention, et un étage de lavage de la caséine constitué par une installation de lavage conforme à l'invention.

L'invention pourra être encore mieux comprise à l'aide des exemples qui suivent, relatifs à des modes de réalisation avantageux.

## EXEMPLE 1

Cet exemple illustre l'influence du rapport eau de lavage sur débit de lait sur l'efficacité du lavage de la caséine.

Quatre essais ont été effectués sur une installation comportant deux modules de filtration montés en série. L'élément filtrant monté sur chaque module est un tamis de marque JOHNSON présentant une dimension de maille de 50 $\mu$m. Dans chaque module deux tamis de 10 cm de largeur et de 1 m de longueur sont montés parallèlement sur le bâti avec un écart de 10 mm entre eux. La surface de percolation est donc de 0,2 m$^2$ par module.

Le tableau 1 ci-après résume les conditions opératoires des essais

## TABLEAU 1

|  | ESSAI 1 | ESSAI 2 | ESSAI 3 | ESSAI 4 |
|---|---|---|---|---|
| Débit global de la suspension | 2760 kg/h | 2700 kg/h | 1080 kg/h | 510 kg/h |
| Concentration de la caséine | 78 g/kg | 76 g/kg | 88 g/kg | 104 g/kg |
| Débit de caséine (M.S: 100 %) | 215 kg/h | 205 kg/h | 95 kg/h | 53 kg/h |
| Débit de lait équivalent au débit de caséine | 7700 l/h | 7700 l/h | 3450 l/h | 1890 l/h |
| Débit eau de lavage | 1000 l/h | 1000 l/h | 1000 l/h | 1000 l/h |
| Rapport eau de lavage sur débit de lait | 0,13 | 0,13 | 0,29 | 0,53 |
| Débit de boucle | 12000 l/h | 12000 l/h | 12000 l/h | 12000 l/h |
| Vitesse dans les boucles | 2,5 m/s | 2,5 m/s | 2,5 m/s | 2,5 m/s |
| Flux de transfert | 5000 $l/h/m^2$ | 5000 $l/h/m^2$ | 5000 $l/h/m^2$ | 5000 $l/h/m^2$ |
| Température | 46°C | 46°C | 48°C | 47°C |
| pH | 4.6 | 4.6 | 4.72 | 4.8 |

Le tableau 2 ci-après présente les résultats obtenus au cours de ces essais, en ce qui concerne l'efficacité du lavage.

TABLEAU 2

|  | ESSAI 1 | ESSAI 2 | ESSAI 3 | ESSAI 4 |
|---|---|---|---|---|
| LACTOSE DANS CASEINE (exprimée à 100% de M.S) |  |  |  |  |
| Concentration entrée lavage $C_{in}$ | 0,065 kg/kg | 0,063 kg/kg | 0,056 kg/kg | 0,057 kg/kg |
| Concentration sortie lavage $C_f$ | 0,037 kg/kg | 0,040 kg/kg | 0,017 kg/kg | 0,009 kg/kg |
| $\dfrac{C_{in}}{C_f}$ | 1,7 | 1,57 | 3,3 | 6,3 |
| LACTOSE DANS LA PHASE LIQUIDE SURNAGEANTE |  |  |  |  |
| Concentration entrée lavage $C_{in}$ | 15,0 g/kg | 14,7 g/kg | 14,7 g/kg | 13,7 g/kg |
| Concentration sortie lavage $C_f$ | 10,4 g/kg | 10,5 g/kg | 5,1 g/kg | 2,8 g/kg |
| $\dfrac{C_{in}}{C_f}$ | 1,49 | 1,4 | 2,88 | 4,89 |
| TENEUR EN CENDRES DANS LA PHASE LIQUIDE SURNAGEANTE |  |  |  |  |
| Concentration entrée lavage $C_{in}$ | 3,3 g/kg | 3,2 g/kg | 3,0 g/kg | 2,9 g/kg |
| Concentration sortie lavage $C_f$ | 2,1 g/kg | 2,2 g/kg | 1,2 g/kg | 0,7 g/kg |
| $\dfrac{C_{in}}{C_f}$ | 1,57 | 1,5 | 2,5 | 4,14 |
| Pertes en fines (% caséine produite à 100% M.S) | 5,5 % | 4,5 % | 9,0 % | 14,0 % |

Comme le montre le tableau 2, le procédé de lavage de la caséine conforme à l'invention permet une importante élimination des impuretés de la protéine, et ceci tout particulièrement dans le cas des essais 3 et 4. Les pertes en fines observées lors des essais 1 et 2 sont très faibles, et ceci constitue évidemment un intérêt essentiel du procédé conforme à l'invention. Les pertes en fines des essais 3 et 4 sont plus élevées mais ne sont toutefois pas représentatives des pertes telles qu'elles seraient observées sur une installation industrielle comportant un nombre plus élevé de modules de filtration. Dans le cas présent, elles sont dues en effet aux augmentations du débit d'eau de lavage qui ont été fixées afin de permettre l'obtention d'une pureté élevée de la protéine sur cette installation ne comportant que deux modules.

## EXEMPLE 2

Des essais de concentration d'une suspension de caséine sont réalisés sur la même installation que celle décrite à l'EXEMPLE 1. La vitesse de circulation dans les boucles est de 2,5 mètres par seconde. Le débit d'entrée de la caséine est de 1980 litres par heure, soit l'équivalent d'environ 6300 litres de lait par heure. Les débits d'extraction de "sérum" sont dans un premier essai 5 de 400 litres par heure dans la première boucle et de 600 litres par heure dans la seconde boucle, et dans un deuxième essai 6 de 500 litres par heure dans la première boucle et de 450 litres par heure dans la seconde.

La pression de gavage de l'installation est comprise entre $1,6.10^4$ et $2,1.10^4$ pascals. La température pour les deux essais est de 44°C et le pH de 4.65. Les résultats et les bilans de concentration pour ces deux essais sont indiqués dans le tableau 3 ci-dessous

### TABLEAU 3

|  | ESSAI 5 | ESSAI 6 |
|---|---|---|
| Conc. entrée Module 1 | 9,15% | 8,45% |
| Conc. sortie Module 1 (= conc. entrée Module 2) | 9,95% | 9,81% |
| Conc. sortie Module 2 | 14,60% | 15,60% |

Ce tableau permet de montrer qu'il est possible, grâce à l'installation de concentration conforme à l'invention, d'augmenter très notablement la concentration de la suspension de protéine.

La même concentration finale peut être obtenue en partant d'une suspension de caséine prélevée à la sortie du tube de coagulation et dont la concentration se situe aux alentours de 2,7 %.

### Revendications

1. Procédé de lavage en continu de protéine, notamment de protéine laitière et plus particulièrement de caséine, caractérisé par le fait qu'il consiste à faire circuler une suspension de ladite protéine dans un ou plusieurs modules de filtration tangentielle comportant chacun au moins un canal axial muni ou constitué d'éléments de filtration dans lequel circule la suspension et qui est traversé par un flux de fluide de lavage entrant et sortant de façon sensiblement perpendiculaire au sens de circulation de ladite suspension.

2. Procédé de lavage en continu de protéine, selon la revendication 1, caractérisé par le fait que la vitesse tangentielle de circulation de la suspension de protéine dans le canal axial est supérieure à 1,0 m/s, de préférence comprise entre 1,1 et 10,0 m/s, et plus préférentiellement encore entre 2 et 3 m/s.

3. Procédé selon l'une des revendications 1 ou 2, caractérisé par le fait que la dimension de passage du canal axial est comprise entre 1 et 20 mm, de préférence entre 7 et 13 mm.

4. Procédé selon l'une quelconque des revendications 1 à 3, caractérisé par le fait que la maille des éléments de filtration est comprise entre 5 et 100 $\mu$m, de préférence entre 10 et 80 $\mu$m, et plus préférentiellement encore entre 30 et 70 $\mu$m.

5. Procédé selon l'une quelconque des revendications 1 à 4, caractérisé par le fait que le débit de fluide d'appoint de lavage entrant dans le système de lavage est compris entre 5 et 100 % et de préférence entre 10 et 80 % du débit de suspension de protéine.

6. Installation de lavage de protéine, caractérisée par le fait qu'elle comprend au moins un module de filtration comportant au moins un canal axial muni ou constitué d'éléments de filtration, des moyens aptes à amener et à faire circuler une suspension de protéine à l'intérieur dudit canal axial, des moyens propres à amener et à faire circuler un fluide de lavage dans ledit canal axial, ainsi que des moyens propres à réaliser une boucle de circulation entre l'entrée et la sortie dudit module de filtration.

7. Installation de lavage selon la revendication 6, caractérisée par le fait qu'elle comprend plusieurs modules de filtration disposés en série, des moyens de circulation étant établis entre chacun d'eux, la suspension de protéine étant envoyée à l'intérieur du premier module, et le fluide de lavage étant envoyée à l'intérieur du dernier module, ces deux fluides circulant à contre-courant.

8. Installation de concentration d'une suspension de protéine, caractérisée par le fait qu'elle comprend au moins un module de filtration comportant au moins un canal axial muni ou constitué d'éléments de filtration, des moyens aptes à amener et à faire circuler la suspension de protéine à l'intérieur dudit canal axial, ainsi que des moyens propres à réaliser une boucle de circulation entre l'entrée et la sortie dudit module de filtration.

9. Installation de concentration d'une suspension de protéine selon la revendication 8, caractérisée par le fait qu'elle comprend plusieurs modules de filtration, ceux-ci étant disposés en série.

10. Installation de lavage ou de concentration d'une suspension de protéine selon l'une quelconque des revendications 6 à 9, caractérisée par le fait que la plus grande dimension du canal axial est comprise entre 5 et 15 mm, et plus préférentiellement comprise entre 7 et 13 mm, et que la maille des éléments de filtration munissant ou constituant ledit canal axial est comprise entre 5 et 100 $\mu$m, de préférence entre 10 et 80 $\mu$m, et plus préférentiellement encore entre 30 et 70 $\mu$m.

11. Installation de fabrication de caséine, caractérisée par le fait qu'elle comprend un étage de coagulation du lait, un étage de concentration de la caillebotte obtenue constitué par une installation de concentration selon l'une quelconque des revendications 8 à 10, et un étage de lavage de la caséine constitué par une installation de lavage selon l'une quelconque des revendications 6, 7 ou 10.

FIG.1.

FIG.2.

ENTREE PROTEINE A PURIFIER

SORTIE PROTEINE

SEPARATION MECANIQUE

EAU

FIG.3.

Office européen
des brevets

**RAPPORT DE RECHERCHE EUROPEENNE**

Numero de la demande

EP    91 40 3098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|------------------------------------------|------------------------|------------------------|
| A | FR-A-2 481 887 (SERIACO) <br> * page 6, ligne 11 - ligne 18; revendications 1-10 * <br> --- | 1 | A23J1/20 |
| A | EP-A-0 226 221 (SAMUELSSON, E.G.) <br> * colonne 4 - colonne 5; exemple 1 * <br> ----- | 1 | |
| | | | **DOMAINES TECHNIQUES RECHERCHES (Int. Cl.5)** <br><br> A23J <br> A01J |

Le présent rapport a été établi pour toutes les revendications

| Lieu de la recherche | Date d'achèvement de la recherche | Examinateur |
|----------------------|-----------------------------------|-------------|
| LA HAYE | 10 JANVIER 1992 | SANTOS DIAZ A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................

& : membre de la même famille, document correspondant

EPO FORM 1503 03.82 (P0402)